# EUROPÄISCHE PATENTANMELDUNG

(11) **EP 1 127 484 A1**
(43) Veröffentlichungstag der Anmeldung: **29.08.2001**
(21) Anmeldenummer: 00104026.0
(22) Anmeldetag: 26.02.2000
(51) Int. Cl.: A01K 1/015

(54) **Streu- und Sorptionsmaterial insbesondere für Huftiere**

(71) Anmelder: RECUCOMP Handelsgesellschaft für Begrünungskomponenten mbH, 93197 Zeitlarn/Ödenthal (DE)
(72) Erfinder: Schmidmeier Thomas, 93197 Ödenthal (DE)

(57) **Zusammenfassung**

Die Erfindung betrifft ein Produkt aus gehäckseltem Stroh, Bentonit und Zellulose.

Das vorstehende Produkt, gemäß der Erfindung, ist in Pelletform ausgebildet und erreicht diese Form durch Pressen von einer Mischung aus gehäckseltem Stroh, Bentonit und Zellulose mittels einer Matritzenpresse. Durch die Erhitzung beim Pressvorgang werden Pilzsporen und Bakterien abgetötet.

Gemäß der Erfindung wird das Produkt in Ställen als Einstreu- und Sorptionsmaterial zur Bindung von Exkrementen ausgelegt. Genanntes Produkt verfügt über hohe Saugfähigkeit und Geruchsbindefähigkeit, bildet durch die mechanische Belastung (Zertreten) durch Huftiere, insbesondere Pferden einen weichen "Teppich", wird nach einiger Zeit aufgenommen (ausgewechselt) und kann als Dünger auf Felder ausgebracht werden.

## Beschreibung

Die Erfindung betrifft ein Einstreu- und Sorptionsmaterial insbesondere für Huftiers wie Pferde und dergleichen, das aber auch bei Schafen, Kühen, Ziegen usw. in Stallungen verwendet werden kann.

Das neuartige Einstreumaterial zeichnet sich aus durch eine optimale Festigkeit bei gleichzeitig starker Adsorptionswirkung nicht nur für Feuchtigkeit wie Urin usw. sondern auch für Gase, die aus dem Dung der Tiere entstanden sind. Dies gilt vor allem für geschlossene Stallungen, in denen die besagten Tiere, insbesondere Pferde usw. untergebracht sind.

Einstreumaterialien z.B. -und insbesondere- für Haustiere wie Katzen, Hunde, Karnikel u.a. sind bekannt und werden u.a. in der DE 41 01 243 beschrieben.
Das hier erwähnte Tierstreumaterial bestht aus einem Gemisch von Zellulose oder Zellulosederivaten mit Beschwerungsmitteln sowie einem oder mehreren Verdickern bzw. Bindemitteln. Das bekannte Produkt liegt in form von Partikeln vor, die eine Teilchengröße von oberhalb 1 mm, insbesondere von 1-10 mm aufueisen. Ausgangsmaterialien für derartiges Tierstreumaterial sind u.a. Holz- und Papierabfälle, Pigmente, Zeolithe usw., die in entsprechender Korngröße und Gemisch angeboten werden.

Die DE 37 32 807 beschreibt ein Einstreumaterial, das insbesondere, wenn nicht ausschließlich, für Katzen usw, voroesehen ist. Dabei handelt es sich um sogenannte Briketts, die nicht kleiner als 5 mm sein sollen und überwiegend aus Strohmaterial wie Strohmehl hergestellt sind.

Auch die DE 196 17 224 beinhaltet ein Streumaterial ebenfalls bevorzugt für Katzen, das inform fester Elemente vorliegt, die im wesentlichen aus Rückständen von pflanzlichen Substanzen, insbesondere aus Frucht-Pressrückständen z.B. von Apfeln und dergleichen Früchten, Gemüsereste oder auch Zuckerrüben, gewonnen werden. Dabei können derartige Produkte zusätzlich auch als organische Bodenverbesserungsmaterialien Verwendung finden.

Ein Einstreumaterial, ebenfalls bevorzugt für Katzen und verwandter Tiere, bestht gemäß der DE 43 28 285 aus einem Gemisch von feuchtigkeitsabsorbierenden Materialien wie Zellulose und einem mineralischen Zusatz wie Glimmer, Vermiculit usw. wobei der Zusatz eine blättchenförmige Konstitution aufweisen soll und auf <2 mm zerkleinert ist.

Ein Futter-, Streu- oder Bodenvernesserungsmittel wird in der 42 01 410 beschrieben. Das Produkt wird aus Heu bzw. Stroh gewonnen und zu Pellets verpresst.
Aufgabe dieser Schrift bzw. Stands der Technik ist die Vermeidung von Staubbildung bei der Handhabung bzw. beim Ausstreuen in der Kleintierhaltung.

Alle vorgenannten Materialien dienen ausschließlich als Streuprodukte für Kleintiere, wie sie z.B. in der Wohnung oder im Wohnbereich als sogenannte Haustiere gehalten werden.
Dabei kann es sich bei diesen Gemischen um streufähige Zellulose bzw. auf Zellulosebasis aufgebaute Stoffe handeln, insbesondere Stroh, Häcksel, Granulat, Pulver und dergleichen, die jedoch nur eine bedingte Festigkeit aufweisen und deren Sorptionsvermögen für Flüssigkeiten , z.B. Urin und andere Ausscheidungen äußerst begrenzt ist. Aus diesem Grunde ist der Einsatz dieser bekannten Materialien bzw. Stoffgemische, nahezu ausschließlich für häusliche. Kleintiere vorgesehen, und bezüglich Festigkeit, Stabilität, Saugvermögen usw. auf häusliche Kleintiere beschränkt.

Gegenstand vorliegender Erfindung ist ein Streu- bzw. Einstreumaterial, das bevorzugt, wenn nicht ausschließlich für stallungsbedingte Huftiere wie Pferde, Esel usw. entuickelt wurde und insbesondere der Größe und Schwere dieser Tierfamilie -wobei Pferde hier nur beispielhaft genannt sind- Rechnung trägt. Es handelt sich somit vorwiegend um ein Einstreu- und Sorptionsmaterial, das der Körpergröße und Schwere dieser Tierspezies Rechnung trägt, Tiere also, die in landwirtschaftlichen Betrieben in Stallungen oder Weiden untergebracht sind und ein erhebliches Maß an Streu-bzw. Unterlagsmasse bedürfen.

Ein derartiges Material erfordert neben einer optimalen Sorptions- bzw. Saugfähigkeit für Flüssigkeiten wie Urin, Weichkot, Schweiss usw. eine sehr starke Gruchsbindung, eine optimale Stabilität bzw. Festigkeit, einfache und unkomplizierte Handhabung bei der Entfernung bzw. Erneuerung sowie absolute Verträglichkeit für das stehende oder liegende Tier. Dabei spielt auch eine evtl. Wiederverwertung und damit das Problem der Entsorgung sowie ein Optimum an physikalischer Stabilität eine erhebliche Rolle, wobei dem Eigenverhalten des Huftiers Rechnung zu tragen ist.

Das erfindungsgemäße Einstreumaterial für Huftiere wie Pferde usw., das insbesondere, aber nicht ausschließlich, in Stallungen zum Einsatz kommt und optimal wiederverwendbar ist, das keinerlei Staubbelastung aufweist, ein hohes Maß an Festigkeit bei gleichzeitig optimaler Saugfähigkeit bzw. Sorptionsvermögen besitzt, besteht aus Formlingen bzw. Pellets, die durch Agglomerieren geeigneter Mischungen gewonnen werden und aus folgenden Mischungsverhältnissen aufgebaut sind:

| | |
|---|---|
| ca. | 77 bis 93 Gew.-% gehäckseltem bzw. zerkleinerten Stroh; |
| ca. | 5 bis 15 Gew.-% Zellulose, z.B. aus Holz, Baumwolle, Flachs, Hanf oder geeignete Oxy- und Hemizellulosen, sowie |
| ca. | 2 bis 8 Gew.-% Bentonit. |

Derartig aufgebaute Granulate bzw. Pellets, die durch trockenes oder schwach angefeuchtetes Mischen der einzelnen Komponenten mit anschließendem Pelletisieren unter schwachem Druck in kontinuierlicher Verfahrensweise erzeugt werden, besitzen in besonders vorteilhafter Ueise eine zylindrische Form von ca. 10 - 30 mm Länge und einen Durchmesser von etwa 5 - 10 mm.
Die Pellets besitzen in etwa eine Dichte von ca. 1,0 - 1,3 g/cm³ bzw. ein äquivalentes Schüttgewicht von ca. 480 - 720 kg/m³.
Selbstverständlich sind auch geringe Abweichungen von Höhe bzw. Länge und Querschnitt der Pellets möglich, doch haben sich vorstehende Werte in der Praxis als besonders vorteilhaft erwiesen.
Pellets bzw. Granulate oder Formkörper vorstehender Zusammensetzung und Maße besitzen ein durchschnittliches Flüssigkeitsaufnahmevermögen von mind. 100 Geu.-%, d.h. sie können volumen- und gewichtsmäßig beim Einsatz in Ställen für Huftiere, insbes. Pferde das Doppelte ihres Eigengewichts bzw. -volumens aufnehmen.
Nach der Herstellung bzw. Regenerierung besitzen sie noch einen Feuchtigkeitsgehalt von ca. 10 - 14 Gew.-%, bedingt durch den Wassergehalt der eingesetzten Ausgangsmaterialien sowie den Feuchtigkeitsgehalt der zur Herstellung eingesetzten Komponenten.

In diesem Zusammenhang sei gesagt, daß eine Regenerierung durchaus möglich ist, daß aber zwecks Verhinderung von Restgeruch und verbleibender Restanteile toxischer Substanzen aus dem Urin bzw. Kot eine Regenerierung keine wesentlichen Verbesserungen erbringt, sondern eine Weiterverwendung als Dünger für Wiesen und landwirtschaftliche Anbaugebiete von Vorteil ist, dies insbesondere auch aufgrund des hohen Gehalts an organischen Bestandteilen, insbes. Stickstoffverbindungen. Damit erhalten die erfindungsgemäßen Formlinge eine zusätzliche Bedeutung für landwirtschaftliche Betriebe, indem das in den Pellets absorbierte Material einer weiteren Zweckbindung zugeführt wird.

Nach der Herstellung, d.h. im Anschluß an die Mischung der Komponenten und der darauf folgenden Formgebung (Pelletisierung) bei mitlerem bis mäßigem Druck zeigen die Formstücke mit den bereits genannten Maßen beim offenen Lagern bzw. Einstreuen, z.B. in Pferdeboxen, praktisch keine Staubentwicklung, dies auch im wesentlichen unter dem Druck des sich bewegenden Tieres (Pferd u. dgl.).

Die Pellets gemäß der Erfindung sind praktisch nicht entflammbar, trotz des relativ hohen Gehalts an organischem Material (Halmstroh, Holzfasern, Baumwollfasern u. dgl.); sie zeigen kein Nachlassen von Form und Festigkeit und verändern ihre äußere Form nur in geringem Maße unter dem Druck des sich beuegenden Tieres (letzteres selbstverständlich in Abhängigkeit von der Größenordnung des aufgenommenen bzw. adsorbierten Flüssigkeitsmaterials).

Die Herstellung der erfindungsgemäßen Formlinge bzw. Pellets erfolgt auf geeigneten Druck-, Press- oder Saugeinrichtungen mit veränderlichen bzw. einstellbaren Querschnittseinstellunoen. Derartige Pelletisiermaschinen sind bekannt und nicht Gegenstand der Erfindung. Selbstverständlich geht der eigentlichen Pelletisierung ein Vorbehandlungs- und Mischprozess voraus, wobei das Stroh, insbes. Halmgut von Kornmaterial, gehäckselt bzw. geschnitten wird, die Zellulose zerfasert und das jeueilige Bentonitmaterial als Pulver, ggf. in Gegenwart geringer Mengen bindender und flüssiger Komponenten, z.B. auch ausschliesslich Wasser, untergemischt wird. Die eigentliche Formgebung z.B. durch Extrudieren oder ähnlicher Formgebungsprozesse erfolgt in bekannter Weise ggf. unter angepasstem Druck.

Als Bentonit im Sinne der Erfindung eignen sich praktisch alle handelsübliche Tonarten, die ein starkes Quellungs- und Adsorptionsvermögen besitzen und deren Hauptbestandteil das Mineral Montmorillonit bildet. Derartige Bentonite sind bes. wirksam zur Ab- bzw. Adsorption von Flüssigkeiten und Gasen, dies sowohl für solche alkalischer als auch saurer Natur. Dieserhalb sind die vielfach verfügbaren speziellen Bentonite besonders wirksam zur Bindung von Ammoniak, Stickoxiden, Harnstoffderivate usw. sowohl in flüssigem als auch gasförmigem Zustand.

Die erfindungsgemäßen Pellets bzw. Formlinge besitzen eine feste, jedoch poröse Konstitution, und zeigen, auch unter Druck, keine Staubentwicklung.

Sie sind trotz des relativ hohen Anteils an zerkleinertem bzw. gehäckseltem Stroh kaum oder praktisch nicht entflammbar und zeigen -wie einleitend bereits gesagt- eine Saugfähigkeit für Flüssigkeiten von mehr als 100 Gew.-%, bezogen auf das Eigengewicht.

Bei der Anwendung bzw. beim Einsatz in Stallungen, Boxen usw. für Huftiere wird das erfindungsgemäße Streumaterial im allgemeinen ganzflächig in einer Höhe bzw. Dicke von einbis maximal fünffachem Durchmesser der sogenannten Pellets ausgebreitet, sodaß es teppichförmig die Gesamtfläche der Box bzw. Stallung des oder der Huftiere bedeckt.
Für das Tier ist hierdurch eine feste, aber erträgliche und elastische Bodenlage gegeben, die nach erstmaligem oder auch mehrmaligem Ablassen von Urin und weichem Kot einem langsamen Zerfall der Pellets unterliegt und damit eine Art weichen Belag des Stein- oder Holzbodens der Stallung bildet. Dieser verliert dann schnell an Härte und Unsicherheit, ohne jedoch seine Saugkraft einzubüssen.

Dies vor allem aufgrund des hohen bzw. starken Saugvermögens der Kombination aus Strohfasermaterial, sorbierendem Bentonit und Zellulose im erfindungsgemäßen Aufbauverhältnis.

Erst nach Tagen, vielfach erst nach Wochen -als Funktion der Verweilzeit des bzw. der Tiere auf der Gegebenen Bodenflächenimmt die Weichheit des gestreuten "Teppichs" eine Konsistenz an, die einen Wechsel des Straumaterials erforderlich macht.

Damit ist aber die Aufgabe des neuartigen Streumaterials noch nicht erschöpft.

Es hat sich nämlich herausgestellt, daß das nunmehr "nasse", d.h. Urin und weitere absorbierte Flüssigkeiten -sowie Gase in den Flüssigkeiten- enthaltende Material von weicher, aber immer noch bröckliger Konsistenz als hervorragender Dünger nicht nur für Wiesen und Weiden geeignat ist, sondern aufgrund des hohen Ammonium, d.h. Stickstoffgehalts auch zur Düngung von Halm- und Wurzelgut wie Getreide, Kartoffeln, Rüben usw. wirksam ist, sodaß das neuartige Streugut für Huftiere keiner Entsorgung im herkömmlichen Sinne bedarf.

In diesem Zusammenhang sei noch darauf hingewiesen, daß einem Zusatz an Fungiziden, Insektiziden oder weiterer landuirtschaftlich geeigneter und für das Tier verträglicher bzw. nicht schädlicher Stoffe direkt bei der Herstellung der Pellets nichts im Wege steht, sodaß das "verbrauchte" Material nach der Entnahme aus dem Stall bzw. der Tierbox direkt als vielfach wertvolles, gezieltes Misch- bzw. Düngermittel verwendet werden kann.

Auch ist zu erwähnen, daß beim Herstellungsprozess der Pellets in den Rohstoffen bzw. Ausgangsmaterialien enthaltende Schädlinge wie Amöben, Insekten, Würmer, Pilze usw. abgetötet bzw. vernichtet werden.

Zusammenfassend liefert das neue Streumaterial eine optimale Lagergrundlage, insbesondere für Huftiere, die eine absolute Hygiene vermittelt, hohe Festiokeit bei optimalem Ad- bzw. Absorptionsvermögen für Flüssigkeiten, semifluiden Exkrementen und Geruchsbildner aufweist, sodaß derartige Schadstoffe nicht nur eliminiert, sondern als adsorbierte Begleitstoffe in Düngemitteln mit hohem N- und P-Gehalt eine einfache Entsorgung bietet.

Schließlich sei noch darauf hingewiesen, daß die geometrische Form der Streumaterialien nicht unbedingt and die Zylinderkonfiguration gebunden ist, sondern auch andere Formen wie Quader oder Kuben mit ähnlichen Massen wie für die Zylinder, durchaus den gleichen Zweck erfüllen.

Bevorzugt wird das neuartige Streumaterial für Huftiere in hierzu geeigneten speziellen Fabrikationsanlagen im kontinuierlichen Prozess hergestellt und in geeigneten Verpackungen wie Papiersäcken, Containern usw. dem Verbraucher geliefert. Dabei sei darauf verwiesen, daß das verbrauchte, d.h. gesättigte Material in einer Art von Recycling Prozess im Herstellungsbetrieb wieder aktiviert werden kann, obwohl der Verwendung als Düngemittel aus ökonomischen Gründen der Vorzug zu geben ist.

## Patentansprüche

1. Streumaterial, insbesondere für Huftiere wie Pferde od. dgl., die in Ställen, Tierboxen oder auf eingezäumten Freiflächen untergebracht sind und ein erhebliches Maß an flüssigen und semiflüssigen bzw. saugfähigen Exkrementen liefern,
**dadurch gekennzeichnet**, daß das Streumaterial besteht aus
| | |
|---|---|
| ca. | 77 - 93 Gew.-% gehäckseltem oder zerkleinertem Stroh, insbes. Halmstroh, |
| ca. | 5 - 15 Gew.-% Cellulose und |
| ca. | 2 - 8 Gew.-% Bentonit. |

2. Streumaterial nach Anspruch 1,
**dadurch gekennzeichnet**, daß es ein durchschnittliches Schüttgewicht von ca. 480 - 720 kg/m³ besitzt.

3. Streumaterial nach Ansprüchen 1 und/oder 2,
**dadurch gekennzeichnet**, daß es in Form von geometrisch orientierten, insbesondere zylindrischen Formlingen bzw. Pellets vorliegt.

4. Streumaterial nach einem der Ansprüche 1 - 3,
**dadurch gekennzeichnet**, daß die Formlinge oder Pellets eine durchschnittliche Länge (Höhe)von
| | |
|---|---|
| ca. | 20 - 50 mm und einen zylindrischen Durchmesser von |
| ca. | 10 - 20 mm aufweisen. |

5. Streumaterial nach Anspruch 4,
**dadurch gekennzeichnet**, daß die Formlinoe bzw. Pellets eine durchschnittliche Länge bzw. zylindrische Höhe von
| | |
|---|---|
| ca. | 10 - 30 mm und einen zylindrischen Durchmesser von |
| ca. | 5 - 10 mm aufweisen. |

6. Streumaterial nach einem der Ansprüche 1 - 5,
**dadurch gekennzeichnet**, daß die Formlinge oder Pellets in kubischer Form vorliegen, wobei Höhe bzw. Länge und Breite bzw. Tiefe den Maßangaben gemäß Ansprüchen 4 und 5 entsprechen.

7. Streumaterial gemäß Ansprüchen 1 - 6,
**dadurch gekennzeichnet**, daß die Formlimge, Pellets oder Kuben eine Dichte von
| | |
|---|---|
| ca. | 1,0 bis 1,3 g/cm³ bzw. eine äquivalentes Schüttgewicht von |
| ca. | 480 - 720 kg/m³ besitzen. |

8. Streumaterial gemäß Ansprüchen 1 - 7,
**dadurch gekennzeichnet**, daß es eine Saugkapazität für Flüssigkeiten bzw. fluide Stoffe besitzt, die höher liegt als 100 Vol.-% des Eigenvolumens.

9. Verwendung des durch Ad- bzw. Absorption mit Flüssigkeit gesättigten, Stickstoff und ggf. Phosphor enthaltenden Streumaterials als Düngemittel für Halm- und Wurzelfrüchte.
